# FASCICULE DE BREVET EUROPEEN

(11) **EP 2 663 423 B1**
(45) Date de publication et mention de la délivrance du brevet: **11.03.2015**
(21) Numéro de dépôt: 11811068.3
(22) Date de dépôt: 09.12.2011
(51) Int. Cl.: B23P 15/04, B23K 20/18, B21D 53/78, F01D 5/14, B23K 20/02, F04D 29/38

(54) **PROCÉDÉ DE RÉALISATION D'UN RENFORT MÉTALLIQUE D'UNE AUBE DE TURBOMACHINE**
VERFAHREN ZUR HERSTELLUNG EINER METALLVERSTÄRKUNG FÜR EINE TURBOMASCHINENSCHAUFEL
METHOD OF PRODUCING A METAL REINFORCEMENT FOR A TURBINE ENGINE BLADE

(30) Priorité: 10.01.2011 FR 1150167
(43) Date de publication de la demande: 20.11.2013
(73) Titulaire: Snecma, 75015 Paris (FR)
(72) Inventeur: FRANCHET, Jean-Michel, Patrick, Maurice, F-77550 Moissy Cramayel Cedex (FR); KLEIN, Gilles, Charles, Casimir, F-77550 Moissy Cramayel Cedex (FR); LECONTE, Gilbert, Michel, Marin, F-77550 Moissy Cramayel Cedex (FR); MAGNAUDEIX, Dominique, F-77550 Moissy Cramayel Cedex (FR)
(74) Mandataire: Robert, Mathias
(86) Numéro de dépôt international: PCT/FR2011/052921
(87) Numéro de publication internationale: WO 2012/095574

(56) Documents cités:
- EP-A1- 0 192 105
- EP-A1- 1 574 270
- FR-A1- 2 319 008

## Description

La présente invention concerne un procédé selon le préambule de la revendication 1, en particulier un procédé de réalisation d'un renfort métallique destiné à être monté sur le bord d'attaque ou de fuite d'une aube composite de turbomachine, telle qu'une aube de soufflante d'un turboréacteur ou un turbopropulseur d'avion.

Un tel procédé est décrit dans le document FR 2 319 008.

Afin de réduire le poids et le coût des aubes de soufflante de turbomachine, celles-ci sont généralement réalisées en matériau composite. Les aubes de soufflante doivent résister à des contraintes et des chocs importants, du fait de leur vitesse de rotation et des impacts de particules ou de corps étrangers pouvant pénétrer dans la veine d'air. Pour cela, les aubes en composite sont protégées, au niveau de leurs bords d'attaque et/ou de fuite, par des renforts métalliques collés sur les pales des aubes.

Le document EP 1 574 270-A1, au nom de la Demanderesse, décrit un procédé de réalisation d'un renfort par soudage par diffusion et formage superplastique ou SPF/DB (Super Plasting Forming / Diffusion Bonding), consistant à :
- souder deux tôles l'une à l'autre par soudage diffusion afin d'obtenir une préforme, une partie des tôles étant recouverte d'un produit anti-diffusant afin d'éviter leur soudage dans des zones déterminées ;
- cambrer et vriller la préforme,
- gonfler la préforme afin qu'elle subisse un formage superplastique,
- découper la préforme afin d'obtenir le renfort.

Ce procédé ne permet pas de contrôler précisément la forme intérieure de la cavité du renfort. En particulier, les zones de jonction des tôles forment des zones de concentration de contraintes et d'amorce de rupture fragilisant le renfort.

Afin d'améliorer la tenue mécanique du renfort, la demande de brevet FR 10/51992 déposée par la Demanderesse et publiée avec le numéro FR 2 957 545, propose un procédé de réalisation d'un renfort métallique consistant à :
- mettre en forme deux tôles par matriçage pour les rapprocher de la forme définitive du renfort à réaliser,
- positionner les deux tôles de part et d'autre d'un noyau reproduisant les formes internes de l'extrados et de l'intrados du renfort,
- assembler les deux tôles l'une à l'autre autour du noyau de façon étanche et sous vide,
- conformer les tôles sur le noyau par compression isostatique à chaud,
- découper les tôles pour séparer le renfort et libérer le noyau.

La compression isostatique à chaud des tôles permet de conformer les tôles à la forme du noyau et d'obtenir, dans la zone de jonction des tôles, un grand rayon de raccordement et, par conséquent, d'éviter toute zone de concentration de contraintes ou d'amorce de rupture.

Le noyau comporte deux rainures longitudinales, situées sur deux faces opposées du noyau. Au cours de la compression isostatique à chaud, le métal des tôles flue et vient remplir les rainures du noyau et former deux dépressions longitudinales à la surface externe des tôles, visibles de l'extérieur et formant des lignes de découpe. L'opérateur sait ainsi où pratiquer les découpes des tôles afin de séparer le renfort et libérer le noyau.

L'outil de découpe des tôles vient en contact avec le fond des rainures précitées du noyau et l'usine plus ou moins profondément. Le noyau, une fois libéré, est généralement réutilisé pour former d'autres renforts. Du fait des usinages successifs du fond des rainures, le nombre de réutilisations possibles du noyau est limité.

L'invention a notamment pour but d'apporter une solution simple, efficace et économique à ce problème.

A cet effet, elle propose un procédé de réalisation d'un renfort métallique destiné à être monté sur le bord d'attaque ou de fuite d'une aube composite de turbomachine, comportant les étapes consistant à :
- mettre en forme deux tôles pour les rapprocher de la forme finale du renfort à réaliser,
- positionner les deux tôles de part et d'autre d'un noyau reproduisant les formes internes de l'extrados et de l'intrados du renfort,
- assembler les deux tôles l'une à l'autre autour du noyau de façon étanche et sous vide,
- conformer les tôles sur le noyau,
- découper les tôles pour séparer le renfort le long d'au moins une ligne de coupe, et libérer le noyau,
caractérisé en ce que les tôles sont conformées par compression isostatique à chaud, et en ce que le procédé consiste à former sur le noyau des zones sacrificielles en saillie, les tôles étant conformées aux zones sacrificielles lors de la compression isostatique à chaud, la découpe des tôles étant effectuée le long des zones sacrificielles sans dégrader le reste du noyau.

Les zones sacrificielles en saillie sont ainsi usinées progressivement à chaque utilisation du noyau sans dégradation du reste du noyau, ce qui augmente le nombre d'utilisations possibles du noyau. Ces zones sacrificielles peuvent en outre être remplacées, lorsqu'il s'agit d'éléments rapportés sur le noyau, ou reconstruites, par exemple par rechargement de matière à l'aide d'une électrode.

Selon une caractéristique de l'invention, le noyau comporte deux zones sacrificielles opposées, disposées de part et d'autre du noyau, et délimitant deux lignes de découpe opposées.

Selon une forme de réalisation, la découpe des tôles est réalisée à l'aide d'un outil coupant dont l'approche est réalisée perpendiculairement aux surfaces des tôles à découper, une partie externe des zones sacrificielles étant usinée lors desdites découpes.

Selon une autre forme de réalisation, la découpe est réalisée à l'aide d'un outil coupant dont l'approche est latérale par rapport à la zone en saillie, une partie latérale des zones sacrificielles étant usinée lors desdites découpes.

Les zones sacrificielles peuvent être d'une pièce avec le noyau ou formées par des inserts en matériau métallique ou en céramique.

Préférentiellement, les inserts sont logés au moins en partie dans des cavités formées dans le noyau.

De manière avantageuse, lors d'une opération de découpe des tôles, 2 à 10 % des zones sacrificielles sont usinées.

La découpe des tôles peut être réalisée à l'aide d'une fraise, par exemple à l'aide d'une fraise à graver.

De manière préférée, les zones sacrificielles étant en saillie, les tôles sont mises en forme de façon à présenter des zones en creux positionnées sur les saillies des zones sacrificielles avant assemblage des tôles autour du noyau.

Ceci permet aux tôles de mieux s'adapter à la forme du noyau après compression isostatique à chaud. Les zones en saillie et en creux forment également des moyens de positionnement des tôles par rapport au noyau.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1 et 2 représentent schématiquement l'étape de mise en forme des tôles selon le procédé de l'art antérieur,
- la figure 3 représente schématiquement l'étape d'assemblage des tôles autour du noyau de l'art antérieur,
- la figure 4 représente schématiquement l'étape de conformation des tôles sur le noyau de l'art antérieur par compression isostatique à chaud et l'étape de découpe des tôles pour séparer le renfort et libérer le noyau,

- les figures 5 et 6 représentent schématiquement la découpe d'une tôle conformément au procédé de l'art antérieur,
- la figure 7 est une vue en perspective d'une partie du renfort obtenu par exécution du procédé de l'art antérieur,
- les figures 8 à 10 sont des vues correspondant respectivement aux figures 4 à 6, d'une première forme de réalisation du procédé selon l'invention,
- la figure 11 est une vue correspondant à la figure 4, d'une deuxième forme de réalisation du procédé selon l'invention,
- les figures 12 à 15 représentent schématiquement la découpe d'une tôle conformément à la deuxième forme de réalisation du procédé selon l'invention,
- les figures 16 à 18 représentent schématiquement la découpe d'une tôle conformément à la troisième forme de réalisation du procédé selon l'invention,
- les figures 19 à 21 sont des vues correspondant respectivement aux figures 4 à 6, d'une quatrième forme de réalisation du procédé selon l'invention,
- la figure 22 est une vue de face d'une fraise à graver utilisée pour le découpage des tôles.

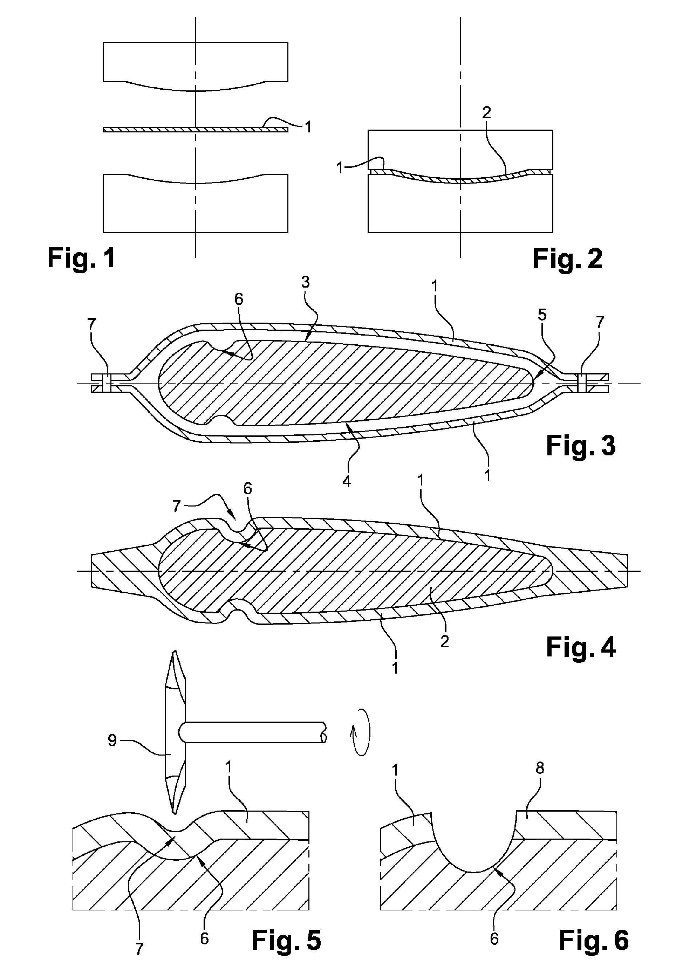

La figure 1 représente une étape de matriçage à chaud de tôles 1 afin de les mettre en forme pour les rapprocher de la forme finale des renforts à réaliser. A l'issue de cette mise en forme, chaque tôle 1 comporte une zone concave 2 délimitant un creux. Les tôles 1 sont en alliage à base de titane, par exemple en TA6V. L'étape de mise en forme est réalisée à une température de l'ordre de 950°C.

Comme cela est représenté à la figure 3, deux tôles 1 identiques sont ensuite disposées en vis-à-vis, de part et d'autre d'un noyau 2, les concavités des tôles 1 logeant chacune une partie du noyau 2.

Le noyau 2 comporte une première face 3 reproduisant la forme interne de l'intrados du renfort à réaliser et une seconde face 4 reproduisant la forme interne de l'extrados du renfort.

La zone de liaison entre les deux faces, c'est-à-dire le bord latéral correspondant 5 du noyau 2, a un rayon de courbure variant le long du renfort de 1 à 5 mm, chacune des faces 3, 4 du noyau comporte une rainure longitudinale 6 dont la fonction est mieux décrite ci-après.

Le noyau 2 est réalisé en un matériau réfractaire avec lequel il n'y a pas diffusion du titane et en un alliage métallique présentant un coefficient de dilatation très différent de celui des tôles 1 en titane, par exemple de l'IN100.

L'objectif est d'éviter toute adhérence des tôles 1 au noyau 2 lors des différentes opérations réalisées, en particulier lors de l'opération de compression isostatique à chaud, et de faciliter l'extraction du noyau.

Dans ce but également, le noyau 2 peut être passivé par recouvrement par une barrière anti-diffusion non contaminante pour le matériau métallique des tôles 1, par exemple en oxyde d'yttrium.

Une fois les tôles 1 mises en place autour du noyau 2, elles sont assemblées à leur périphérie par pointage (non représenté aux figures) et soudage TIG (Tungsten Inert Gas) afin d'être liées entre elles et maintenues en position. L'ensemble est ensuite placé dans une enceinte de mise sous vide afin d'y souder les tôles 1 l'une à l'autre sur toute leur périphérie, par exemple par soudage par faisceau d'électrons (FE). Le cordon de soudure 7 périphérique continu assure l'étanchéité de la cavité formée entre les tôles 1.

Comme représenté à la figure 3, les tôles 1 sont ensuite conformées sur le noyau 2 par une compression isostatique à chaud lors de laquelle les tôles 1 sont soumises à une pression externe d'environ 1000 bars, à une température d'environ 940°C, et pendant une durée d'environ deux heures, dans le cas où les tôles 1 sont en en alliage de titane TA6V.

Durant cette opération, les tôles 1 se déforment pour se conformer parfaitement au noyau 2, y compris dans la zone de liaison 5 du noyau 2. Dans cette zone en particulier, les tôles 1 se rejoignent tout en épousant la forme arrondie du noyau 2. En outre, le métal des tôles 1 flue et vient remplir les rainures 6 du noyau et former deux dépressions longitudinales 7 à la surface externe des tôles 1, visibles de l'extérieur et formant des lignes de découpe. Parallèlement, du fait de la température élevée et de la pression externe exercée, les deux tôles 1 sont soudées l'une à l'autre par diffusion.

Le renfort 8 est ensuite séparé par découpe des tôles 1 le long des lignes de découpe, par exemple à l'aide d'une fraise ou d'une meule 9 (figures 5 et 6). L'outil 9 permettant la découpe des tôles vient également usiner le fond des rainures correspondantes 6, ce qui dégrade le noyau 2 et limite sa réutilisation pour réaliser d'autres renforts 8.

La matière excédentaire périphérique est retirée par découpe selon des lignes de détourage. Enfin, un usinage de finition permet de donner la forme extérieure recherchée au renfort.

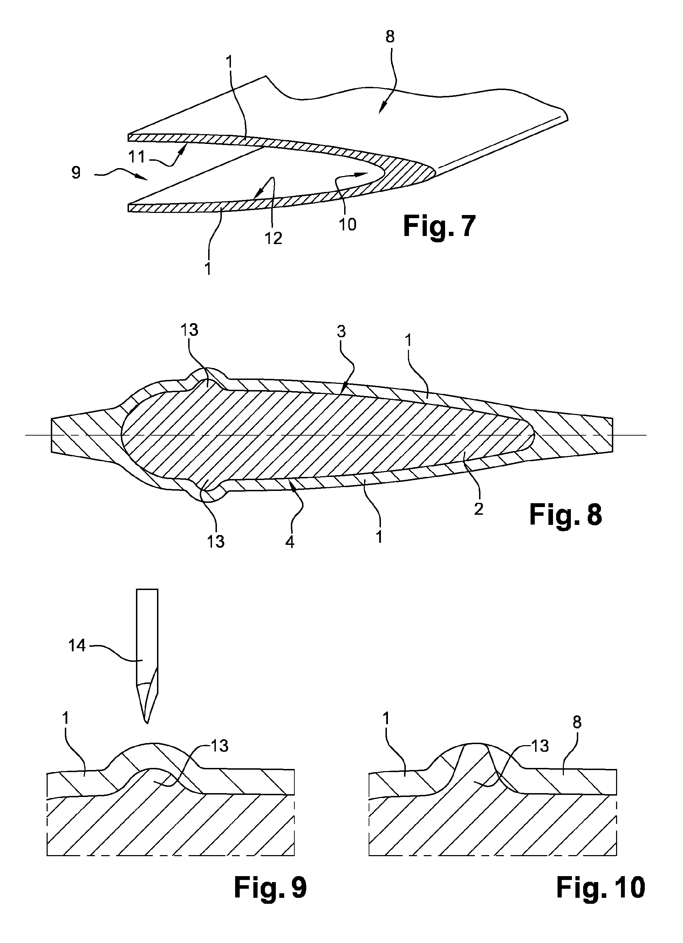

On obtient ainsi un renfort 8 présentant la forme représentée à la figure 7, dans laquelle la jonction entre les deux tôles 1, réalisée par soudage diffusion, assure des caractéristiques mécaniques équivalentes à celles d'une pièce monobloc. La cavité 9 du renfort 8 comporte en outre, au niveau de la zone de jonction 10 entre l'intrados 11 et l'extrados 12, un rayon de courbure suffisamment important pour ne pas générer de concentration de contraintes et de fissures en utilisation.

Le procédé selon l'invention diffère de celui exposé précédemment essentiellement en ce qu'il consiste à former sur le noyau 2 des zones sacrificielles en saillie.

Les zones sacrificielles étant en saillie, les tôles 1 peuvent être mises en forme de façon à présenter des zones en creux positionnées sur les saillies des zones sacrificielles avant assemblage des tôles 1 autour du noyau.

Selon une première forme de réalisation représentée à la figure 8, les rainures du noyau sont remplacées par des zones sacrificielles 13 longitudinales en saillie, situées sur les faces opposées 3, 4 du noyau.

Comme cela est visible en figure 2, les tôles 1 sont conformées aux zones sacrificielles 13 lors de la compression isostatique à chaud.

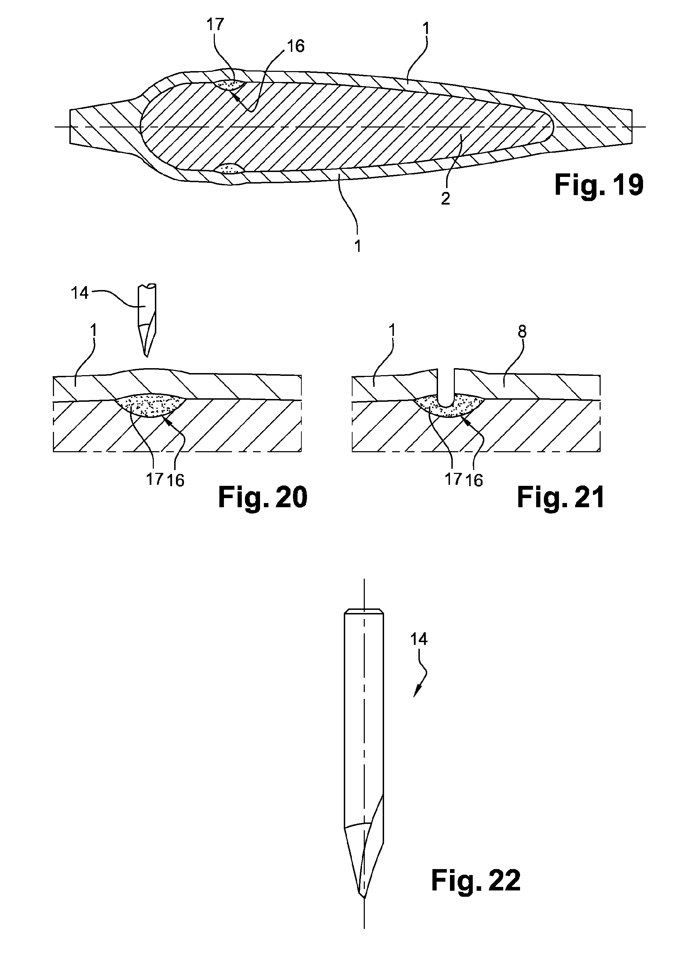

La découpe des tôles 1 est réalisée à l'aide d'un outil coupant, par exemple à l'aide d'une fraise à graver 14 (figure 22), d'une fraise conventionnelle ou d'une meuleuse, dont l'approche est réalisée perpendiculairement aux surfaces des tôles 1 à découper, une partie externe des zones sacrificielles 13 étant usinée lors desdites découpes (figure 10).

En particulier, lors de chaque opération de découpe, 2 à 10 % des zones sacrificielles 13 sont usinées.

A titre d'exemple, la hauteur de la zone en saillie 13 est comprise entre 3 et 5 mm, et chaque opération de découpe entraîne l'usinage de cette zone 13 sur une hauteur d'environ 0,2 mm, ce qui permet de réutiliser le noyau 2 entre 15 et 25 fois pour former d'autres renforts 8. Lorsqu'une majeure partie ou que l'intégralité des zones sacrificielles 13 a été usinée, celles-ci peuvent être régénérées, par exemple par rechargement de matière à l'aide d'une électrode, ce qui permet encore d'augmenter la durée de vie du noyau 2.

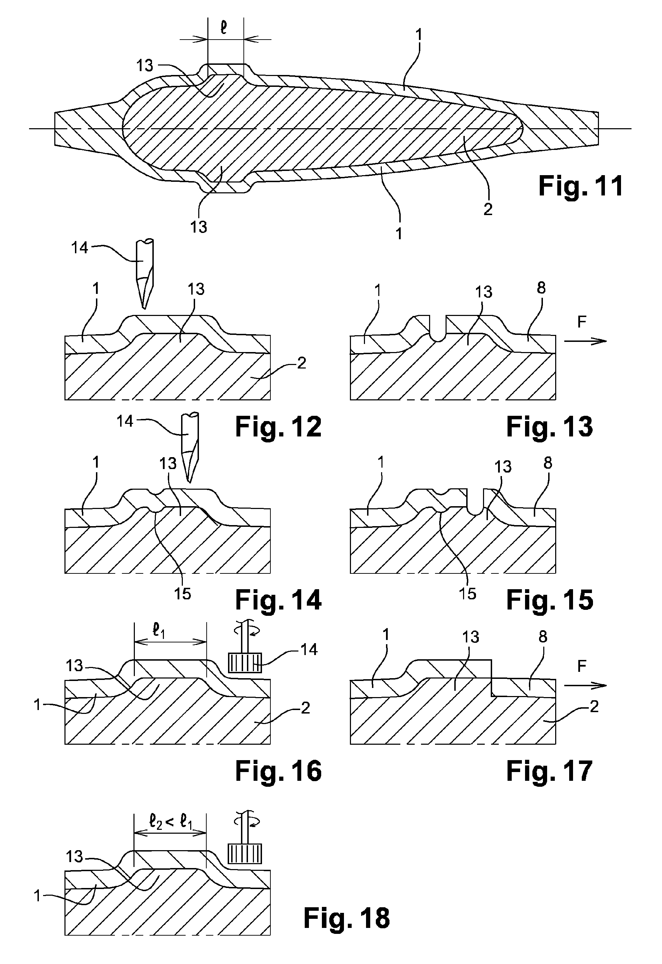

Dans une deuxième forme de réalisation représentée aux figures 11 à 14, les zones sacrificielles 13 présentent une largeur I comprise entre 10 et 20 mm par exemple.

La découpe des tôles 1 est réalisée à l'aide d'un outil coupant 14 dont l'approche est réalisée perpendiculairement aux surfaces des tôles 1 à découper, une partie externe des zones sacrificielles 13 étant usinée lors desdites découpes. L'avance de l'outil peut être pilotée en pression, le matériau du noyau étant généralement plus dur que celui des tôles. Le pilotage en pression permet alors d'éviter de trop usiner les zones 13 du noyau 2 lors de la découpe des tôles 1.

Le renfort 8 peut ensuite être dégagé du noyau dans le sens de la flèche F en figure 13.

Lors d'une seconde utilisation du noyau, la découpe des tôles 1 est réalisée de la même manière que précédemment, la zone de découpe étant toutefois décalée latéralement par rapport à la précédente, en direction de la partie des tôles 1 destinée à former le renfort 8. Ce décalage permet d'éviter d'usiner à chaque fois la même partie des zones sacrificielles 13 et, ainsi, d'augmenter la durée de vie du noyau.

Le décalage vers le renfort 8 permet également de faciliter la séparation du renfort 8 et du noyau 2. En effet, l'usinage d'une partie d'une zone sacrificielle 13 génère une cavité 15 dans laquelle la tôle correspondante 1 va fluer lors de la réalisation du renfort 8 suivant, comme cela est visible en figure 14, ce qui rendrait plus difficile le retrait du renfort 8 si le décalage était effectué dans le sens inverse.

Dans une troisième forme de réalisation représentée aux figures 16 à 18, les zones sacrificielles 13 présentent une largeur I₁ comprise entre 10 et 20 mm par exemple.

La découpe des tôles 1 est réalisée à l'aide d'un outil coupant 14, ici une fraise conventionnelle, dont l'approche est latérale (horizontale sur le dessin) par rapport à la zone en saillie 13, une partie latérale des zones sacrificielles 13 étant usinée lors desdites découpes de sorte que la largeur des zones sacrificielles 13 est réduite à la largeur I₂, inférieure par exemple de 0,2 mm à la longueur I₁. Le renfort 8 peut ensuite être dégagé du noyau 2 dans le sens de la flèche F en figure 17.

Le noyau 2 peut alors être réutilisé, comme cela est représenté à la figure 18, la largeur des zones 13 étant progressivement réduite à chaque nouvelle découpe.

Les figures 19 à 21 décrivent une quatrième forme de réalisation de l'invention dans laquelle le noyau 2 comporte des rainures longitudinales 16 logeant des inserts longitudinaux 17 en matériau métallique ou en céramique. Les inserts 17 peuvent être par exemple des fils rond et font saillie sur la surface externe du noyau 2.

De cette manière, seuls les inserts 17 sont usinés par l'outil 14 lors de la découpe des tôles 1, de sorte que le noyau 2 n'est pas dégradé et peut être réutilisé. Les inserts 17 doivent être changés après une ou plusieurs découpes. Les inserts 17 sont réalisés dans un matériau facilement usinable et présentant un coefficient de dilatation proche de celui du noyau 2, de façon à éviter toute dégradation de celui-ci lorsque l'ensemble est soumis à haute température.

## Revendications

1. Procédé de réalisation d'un renfort métallique (8) destiné à être monté sur le bord d'attaque ou de fuite d'une aube composite de turbomachine, comportant les étapes consistant à :
- mettre en forme deux tôles (1) pour les rapprocher de la forme finale du renfort (8) à réaliser,
- positionner les deux tôles (1) de part et d'autre d'un noyau (2) reproduisant les formes internes de l'extrados et de l'intrados du renfort (8),
- assembler les deux tôles (1) l'une à l'autre autour du noyau (2) de façon étanche et sous vide,
- conformer les tôles (1) sur le noyau (2),
- découper les tôles (1) pour séparer le renfort (8) le long d'au moins une ligne de coupe, et libérer le noyau,
**caractérisé en ce que** les tôles sont conformées par compression isostatique à chaud, et **en ce que** le procédé consiste à former sur le noyau (2) des zones sacrificielles (13, 17) en saillie, les tôles (1) étant conformées aux zones sacrificielles (13, 17) lors de la compression isostatique à chaud, la découpe des tôles (1) étant effectuée le long des zones sacrificielles (13, 17) sans dégrader le reste du noyau (2).

2. Procédé selon la revendication 1, **caractérisé en ce que** le noyau (2) comporte deux zones sacrificielles (13, 17) opposées, disposées de part et d'autre du noyau (2), et délimitant deux lignes de découpe opposées.

3. Procédé selon la revendication 1 ou 2, **caractérisé en ce que** la découpe des tôles (1) est réalisée à l'aide d'un outil coupant (14) dont l'approche est réalisée perpendiculairement aux surfaces des tôles (1) à découper, une partie externe des zones sacrificielles (13, 17) étant usinée lors desdites découpes.

4. Procédé selon la revendication 1 ou 2, **caractérisé en ce que** le noyau (2) est formé avec une zone sacrificielle (13) en saillie, la découpe étant réalisée à l'aide d'un outil coupant (14) dont l'approche est réalisée latéralement par rapport à la zone en saillie (13), une partie latérale des zones sacrificielles (13) étant usinée lors desdites découpes.

5. Procédé selon l'une des revendications 1 à 4, **caractérisé en ce que** les zones sacrificielles (13) sont d'une pièce avec le noyau (2).

6. Procédé selon l'une des revendications 1 à 4, **caractérisé en ce que** les zones sacrificielles (13) sont formées par des inserts (17) en matériau métallique ou en céramique.

7. Procédé selon la revendication 6, **caractérisé en ce que** les inserts (17) sont logés au moins en partie dans des rainures (16) formées dans le noyau (2).

8. Procédé selon l'une des revendications 1 à 7, **caractérisé en ce que**, lors d'une opération de découpe des tôles (1), 2 à 10 % des zones sacrificielles (13, 17) sont usinées.

9. Procédé selon l'une des revendications 1 à 8, **caractérisé en ce que** la découpe des tôles (1) est réalisée à l'aide d'une fraise (14), par exemple à l'aide d'une fraise à graver.

10. Procédé selon l'une des revendications 1 à 9, **caractérisé en ce que** les zones sacrificielles (13, 17) étant en saillie, les tôles (1) sont mises en forme de façon à présenter des zones en creux positionnées sur les saillies des zones sacrificielles (13, 17) avant assemblage des tôles (1) autour du noyau (2).

## Patentansprüche

1. Verfahren zum Herstellen einer metallischen Verstärkung (8), die dazu bestimmt ist, an die Vorder- bzw. Hinterkante einer Verbundschaufel von Turbomaschinen bzw. Turbinentriebwerken montiert zu werden, umfassend die nachfolgenden Schritte:
- Umformen zweier Bleche (1), um sie der endgültigen Form der herzustellenden Verstärkung (8) anzunähern,
- Positionieren der beiden Bleche (1) beiderseits eines Kerns (2), der die Innenformen der oberen Profilseite und der unteren Profilseite der Verstärkung (8) wiedergibt,
- Zusammenfügen der beiden Bleche (1) in dichter Weise und unter Vakuum um den Kern (2) herum,
- Anformen der Bleche (1) an den Kern (2),
- Einschneiden der Bleche (1), um die Verstärkung (8) entlang zumindest einer Schnittlinie zu durchtrennen und den Kern freizugeben,
**dadurch gekennzeichnet, dass** die Bleche durch heißisostatisches Pressen angeformt werden und dass das Verfahren darin besteht, am Kern (2) vorspringende Opferbereiche (13, 17) auszubilden, wobei die Bleche (1) beim heißisostatischen Pressen an die Opferbereiche (13, 17) angeformt werden, wobei das Einschneiden der Bleche (1) entlang der Opferbereiche (13, 17) erfolgt, ohne dabei den restlichen Kern (2) zu beeinträchtigen.

2. Verfahren nach Anspruch 1, **dadurch gekennzeichnet, dass** der Kern (2) zwei entgegengesetzte Opferbereiche (13, 17) aufweist, die beiderseits des Kerns (2) angeordnet sind und zwei entgegengesetzte Schnittlinien begrenzen.

3. Verfahren nach Anspruch 1 oder 2, **dadurch gekennzeichnet, dass** das Einschneiden der Bleche (1) mit Hilfe eines Schneidwerkzeugs (14) erfolgt, dessen Zustellung senkrecht zu den Flächen der einzuschneidenden Bleche (1) erfolgt, wobei ein äußerer Abschnitt der Opferbereiche (13, 17) bei den Schneidvorgängen spanend bearbeitet wird.

4. Verfahren nach Anspruch 1 oder 2, **dadurch gekennzeichnet, dass** der Kern (2) mit einem vorspringenden Opferbereich (13) ausgebildet wird, wobei das Einschneiden mit Hilfe eines Schneidwerkzeugs (14) erfolgt, dessen Zustellung seitlich bezüglich des vorspringenden Bereichs (13) erfolgt, wobei ein seitlicher Abschnitt der Opferbereiche (13) bei den Schneidvorgängen spanend bearbeitet wird.

5. Verfahren nach einem der Ansprüche 1 bis 4, **dadurch gekennzeichnet, dass** die Opferbereiche (13) aus einem Stück mit dem Kern (2) bestehen.

6. Verfahren nach einem der Ansprüche 1 bis 4, **dadurch gekennzeichnet, dass** die Opferbereiche (13) aus Einsätzen (17) aus metallischem Material oder aus Keramik gebildet werden.

7. Verfahren nach Anspruch 6, **dadurch gekennzeichnet, dass** die Einsätze (17) zumindest teilweise in Nuten (16) aufgenommen werden, die im Kern (2) ausgebildet sind.

8. Verfahren nach einem der Ansprüche 1 bis 7, **dadurch gekennzeichnet, dass** bei einem Schneidvorgang der Bleche (1) 2 bis 10 % der Opferbereiche (13) spanend bearbeitet werden.

9. Verfahren nach einem der Ansprüche 1 bis 8, **dadurch gekennzeichnet, dass** das Einschneiden der Bleche (1) mit Hilfe eines Fräsers (14), beispielsweise mit Hilfe eines Gravierfräsers, erfolgt.

10. Verfahren nach einem der Ansprüche 1 bis 9, **dadurch gekennzeichnet, dass** bei vorspringendem Opferbereichen (13, 17) die Bleche (1) so umgeformt werden, dass sie Hohlbereiche aufweisen, die an den Vorsprüngen der Opferbereiche (13, 17) positioniert werden, und zwar vor dem Zusammenfügen der Bleche (1) um den Kern (2) herum.

## Claims

1. A method of making a piece of metal reinforcement (8) for mounting on the leading or trailing edge of a composite turbomachine blade, the method comprising the steps consisting in:
• shaping two metal sheets (1) so as to approximate the final shape of the piece of reinforcement (8) that is to be made;
• positioning the two sheets (1) on either side of a core (2) reproducing the inside shapes of the suction side and of the pressure side of the piece of reinforcement (8);
assembling the two sheets (1) together around the core (2) under a vacuum and in leaktight manner;
• shaping the sheets (1) on the core (2) by hot isostatic compression; and
• cutting the sheets (1) to separate the piece of reinforcement (8) along at least one line of cut, and to release the core;
the method being **characterized in that** it consists in forming projecting sacrificial zones (13, 17) on the core (2), the sheets (1) being shaped to match the sacrificial zones (13, 17) during the hot isostatic compression, and the sheets (1) being cut along the sacrificial zones (13, 17) without degrading the remainder of the core (2).

2. A method according to claim 1, **characterized in that** the core (2) has two opposite sacrificial zones (13, 17) arranged on either side of the core (2) and defining two opposite lines of cut.

3. A method according to claim 1 or claim 2, **characterized in that** the sheets (1) are cut using a cutter tool (14) that is brought up to the surfaces of the sheets (1) for cutting perpendicularly, outside portions of the sacrificial zones (13, 17) being machined away during said cutting.

4. A method according to claim 1 or claim 2, **characterized in that** the core (2) is formed with a projecting sacrificial zone (13), and cutting is performed with the help of a cutter tool (14) that is brought up to the projecting zone (13) laterally, lateral portions of the sacrificial zones (13) being machined away during said cuts.

5. A method according to any one of claims 1 to 4, **characterized in that** the sacrificial zones (13) are integral with the core (2).

6. A method according to any one of claims 1 to 4, **characterized in that** the sacrificial zones (13) are formed by inserts (17) of metallic or ceramic material.

7. A method according to claim 6, **characterized in that** the inserts (17) are received at least in part in grooves (16) formed in the core (2).

8. A method according to any one of claims 1 to 7, **characterized in that**, during an operation of cutting the sheets (1), 2% to 10% of the sacrificial zones (13, 17) are machined away.

9. A method according to any one of claims 1 to 8, **characterized in that** the sheets (1) are cut with the help of a cutter (14), e.g. with the help of an engraving cutter.

10. A method according to any one of claims 1 to 9, **characterized in that** since the sacrificial zones (13, 17) project, the sheets (1) are shaped so as to present hollow zones that are positioned on the projections of the sacrificial zones (13, 17) before the sheets (1) are assembled around the core (2).
